# EUROPEAN PATENT SPECIFICATION

(11) **EP 2 903 368 B1**
(45) Date of publication and mention of the grant of the patent: **14.09.2016**
(21) Application number: 12885742.2
(22) Date of filing: 29.09.2012
(51) Int. Cl.: H04W 72/04, H04L 5/00

(54) **METHOD AND APPARATUS FOR SENDING AND RECEIVING REFERENCE SIGNAL**
VERFAHREN UND VORRICHTUNG ZUM SENDEN UND EMPFANGEN EINES REFERENZSIGNALS
PROCÉDÉ ET APPAREIL PERMETTANT D'ENVOYER ET DE RECEVOIR UN SIGNAL DE RÉFÉRENCE

(43) Date of publication of application: 05.08.2015
(73) Proprietor: Huawei Technologies Co., Ltd., Longgang District Shenzhen, Guangdong 518129 (CN)
(72) Inventor: DAI, Xizeng, Shenzhen Guangdong 518129 (CN); CHENG, Xingqing, Shenzhen Guangdong 518129 (CN); WU, Zuomin, Shenzhen Guangdong 518129 (CN)
(74) Representative: Isarpatent
(86) International application number: PCT/CN2012/082408
(87) International publication number: WO 2014/047915

(56) References cited:
- EP-A1- 2 139 256
- WO-A1-2011/041759
- WO-A2-2011/083986
- CN-A- 101 150 570
- CN-A- 101 540 633
- CN-A- 102 480 342

## Description

### TECHNICAL FIELD

The present invention relates to the field of wireless communication technology, and more particularly to a method and an apparatus for sending and receiving a reference signal, and a terminal device.

### BACKGROUND

Reducing a reference signal of a communication system can reduce overhead of the communication system, so as to improve system capacity. Reducing overhead of the reference signal is an important means to reduce the overhead of the communication system. However, a terminal device needs to use the reference signal to complete timing and synchronous tracking, and performs demodulation and decoding operations only on this basis. While, a certain amount of reference signal symbols are necessary for a timing and synchronous tracking algorithm. If the number of the reference signal symbols is small, the terminal device cannot obtain good timing and synchronous tracking, and thus cannot guarantee good communication quality. Therefore, from the view of guaranteeing the communication quality, the terminal device should be provided with a certain amount of reference signals.

There are various bandwidths in modem communication systems, for example, an LTE (long term evolution) communication system provides six types of bandwidths, i.e., 1.4MHz, 3MHz, 5MHz, 10MHz, 15MHz and 20MHz. When the overhead of the reference signal is reduced for such a system, the timing and synchronous tracking capacity of the terminal device needs to be considered, and a certain amount of reference signals need to be guaranteed. If the bandwidth is small, it is undesirable to reduce the overhead of the reference signal, or it is necessary to reduce the overhead of the reference signal as little as possible.

EP 2 139 256 A1 discloses a variable transmission bandwidth, i.e., a transmission bandwidth which is dynamically changed according to the results of frequency scheduling by the base station.

WO 2011/041759 A1 discloses reporting CSI (i.e., a type of reference signal) with different granularity for different cells.

Therefore, in view of processing capability of the terminal device and a guarantee of communication quality, it is necessary to select appropriate reference signal granularity according to the bandwidth when the overhead of the reference signal is reduced, rather than use the same method for reducing the overhead of the reference signal with respect to all the cases, such as different bandwidths.

### SUMMARY

This application provides a method and an apparatus for sending and receiving a reference signal, so as to solve the technical problem of large reference signal overhead.

In one aspect, embodiments of the present invention provide a method for sending and receiving a reference signal on the premise of saving reference signal overhead, including:
when a sending bandwidth and X satisfy a certain relationship, sending a reference signal symbol only once in every N subframes; and when the certain relationship is not satisfied, sending the reference signal on all the subframes or sending the reference signal on M subframes in every N subframes. Correspondingly, during reception of a terminal device, when a bandwidth and X satisfy a certain relationship, receiving a reference signal symbol only once in every N subframes; and when the certain relationship is not satisfied, receiving the reference signal on all the subframes or on M subframes in every N subframes. Here, one subframe has a duration of 1ms, but does not exclude other values.

In another aspect, embodiments of the present invention provide a method for adjusting a granularity of sending and receiving a reference signal, including:
when the sending bandwidth changes, the granularity of sending the reference signal and the granularity of receiving the reference signal are also adjusted correspondingly. The adjustment method is given in the embodiments of the present invention.

The sending device needs to indicate the terminal device whether the granularity of the reference signal changes with the granularity adjustment of reference signal; the terminal device needs to receive the signaling and may report to the sending device after the granularity change of the reference signal has been completed. The sending device considers that the granularity change of the reference signal has been completed after the reporting is received or the set timer times out, and enters a normal operation. A set of signaling and signaling procedures are given in the present invention.

In still another aspect, embodiments of the present invention provide a sending apparatus for saving reference signal overhead, including:
a first sending module, configured to send the reference signal according to the method for sending the reference signal and send the reference signal and other signals within the bandwidth; configured to adjust a granularity of sending the reference signal according to the change method of sending the reference signal, when the bandwidth changes;
a second sending module, configured to send an indication signaling for indicating a terminal device a change in the granularity of the reference signal, when the bandwidth changes and the granularity of sending the reference signal also changes;
a first processing module, configured to wait after the granularity of sending the reference signal changes, and perform subsequent processing when a certain time arrives; or
configured to perform subsequent processing after a first acquiring module receives a feedback of an apparatus for receiving the reference signal.

In still another aspect, embodiments of the present invention provide a terminal device, including:
a first acquiring module, configured to receive the reference signal according to the method for receiving the reference signal; and configured to adjust a granularity of receiving the reference signal according to the method for adjusting the granularity of receiving the reference signal as described above, when the bandwidth changes;
a second acquiring module, configured to receive a signaling for indicating a change in the granularity of the reference signal, or configured to receive a signaling for indicating a change in a bandwidth and the bandwidths before and after the change.
a first sending module, configured to feed back an indication for indicating the terminal device has completed a granularity change of receiving the reference signal.

Through the method of the embodiments of the present invention, when a bandwidth is greater than or equal to X, the system can effectively reduce the communication overhead by reducing the granularity of sending the reference signal.

### BRIEF DESCRIPTION OF DRAWINGS

In order to illustrate the technical solutions in embodiments of the present invention or the prior art more clearly, accompanying drawings needed in the embodiments or the prior art are illustrated briefly as follows. Apparently, the accompanying drawings are merely certain of embodiments of the invention, and persons skilled in the art can derive other drawings from them without creative efforts.
FIG. 1 is a schematic diagram of a method for sending a reference signal by a sending apparatus on different bandwidths according to an embodiment of the present invention;
FIG. 2 is a schematic diagram of a method for receiving a reference signal by a receiving apparatus on different bandwidths according to an embodiment of the present invention;
FIG. 3 is a schematic flowchart of a corresponding granularity change of sending a reference signal when a bandwidth of a sending apparatus changes according to an embodiment of the present invention;
FIG. 4 is another schematic flowchart of a corresponding granularity change of sending a reference signal when a bandwidth of a sending apparatus changes according to an embodiment of the present invention;
FIG. 5 is a schematic flowchart of a granularity change of receiving a reference signal when a bandwidth of a terminal device changes according to an embodiment of the present invention;
FIG. 6 is another schematic flowchart of a granularity change of receiving a reference signal when a bandwidth of a terminal device changes according to an embodiment of the present invention;
FIG. 7 is a schematic structural diagram of an apparatus for sending a reference signal according to an embodiment of the present invention; and
FIG. 8 is a schematic structural diagram of an apparatus for receiving a reference signal according to an embodiment of the present invention.

### DESCRIPTION OF EMBODIMENTS

The technical solutions in the embodiments of the present invention are hereinafter described clearly and completely with reference to the accompanying drawings in the embodiments of the present invention. Obviously, the embodiments described here are part of the embodiments of the invention and not all of the embodiments. All other embodiments, which can be derived by persons skilled in the art from the embodiments given herein without creative efforts, shall fall within the protection scope of the present invention.

Reducing a reference signal of a communication system can reduce overhead of the communication system, so as to improve system capacity. Reducing overhead of the reference signal is an important means to reduce the overhead of the communication system. However, a terminal device needs to use the reference signal to complete timing and synchronous tracking, and performs demodulation and decoding operations only on this basis. While, a certain amount of reference signal symbols are necessary for a timing and synchronous tracking algorithm. If the number of the reference signal symbols is small, the terminal device cannot obtain good timing and synchronous tracking, and thus cannot guarantee good communication quality. Therefore, from the view of guaranteeing the communication quality, the terminal device should be provided with a certain amount of reference signals.

There are various bandwidths in modern communication systems, for example, an LTE (long term evolution) communication system provides six types of bandwidths, i.e., 1.4MHz, 3MHz, 5MHz, 10MHz, 15MHz and 20MHz. When the overhead of the reference signal is reduced for such a system, the timing and synchronous tracking capacity of the terminal device needs to be considered, and a certain amount of reference signals need to be guaranteed. If the bandwidth is small, it is undesirable to reduce the overhead of the reference signal, or it is necessary to reduce the overhead of the reference signal as little as possible.

Therefore, in view of processing capability of the terminal device and a guarantee of communication quality, it is necessary to select appropriate reference signal granularity according to the bandwidth when the overhead of the reference signal is reduced.

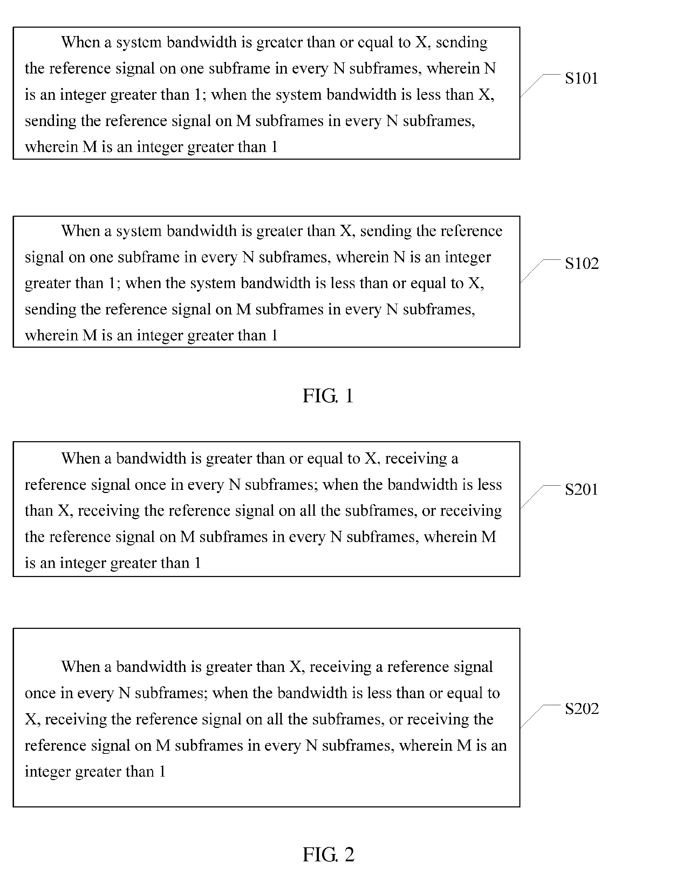

As shown in FIG. 1, in S101, when a communication bandwidth is greater than or equal to X, a granularity of sending the reference signal is to send the reference signal once in every N subframes; however, when the bandwidth is less than X, the granularity of sending the reference signal is to send the reference signal on all the subframes or send the reference signal on M subframes in every N subframes. In S102, when the communication bandwidth is greater than X, the granularity of sending the reference signal is to send the reference signal once in every N subframes; however, when the bandwidth is less than or equal to X, the granularity of sending the reference signal is to send the reference signal on all the subframes or send the reference signal on M subframes in every N subframes. According to theoretical analysis and practice, a typical value of X is 5MHz or 25 PRB, and 3MHz or 15 PRB (corresponding to a bandwidth of LTE, the bandwidth of LTE includes 1.4MHz (6PRB), 3MHz (15PRB), 5MHz (25PRB), 10MHz (50PRB), 15MHz (75PRB) and 20MHz (100PRB), and a typical value of N is 5 subframes. In S102, when the communication bandwidth is less than X, the granularity of sending the reference signal cannot be reduced, that is, the reference signal is sent on all the subframes or in every N subframes, wherein the value of M makes its duration less than a period of N subframes.

The advantageous effects of this sending method are that, when a bandwidth is greater than or equal to X, the system can effectively reduce the communication overhead by reducing the granularity of sending the reference signal, and meanwhile guarantee a certain amount of the reference signals and thus timing and synchronous tracking performances. When the bandwidth is less than X, in order to guarantee the timing and synchronous tracking performances, the sending device takes precedence to consider keeping a certain amount of the reference signals, and appropriately reduces the overhead of the reference signal while guaranteeing the performance. Such a sending method comes to a good compromise between communication quality and reducing overhead of the reference signal.

Correspondingly, when a terminal device receives and uses the reference signal, a granularity of receiving the reference signal is adjusted correspondingly according to a change in the reference signal granularity at the sending end.

As shown in FIG. 2, in S201, when a communication bandwidth is greater than or equal to X, a position of receiving the reference signal is to receive the reference signal once in every N subframes; when the communication bandwidth is less than X, the terminal device receives the reference signal on all the subframes for processing or there are M chances to receive the reference signal on M subframes in every N subframes. In S202, when the communication bandwidth is greater than X, the position of receiving the reference signal is to receive the reference signal once in every N subframes; when the communication bandwidth is less than or equal to X, the terminal device receives the reference signal on all the subframes for processing or there are M chances to receive the reference signal on M subframes in every N subframes. Correspondingly, the typical value of X is 5MHz or 25 PRB, and 3MHz or 15 PRB, and a typical value of N is 5 subframes. In S202, the values of N and M are the same with those as described in FIG. 1.

The advantageous effects of this sending method are that, when a bandwidth is greater than or equal to X, the system can effectively reduce the communication overhead by reducing the granularity of sending the reference signal, and meanwhile guarantee a certain amount of the reference signals and thus timing and synchronous tracking performances. When the bandwidth is less than X, in order to guarantee the timing and synchronous tracking performances, the receiving device can acquire more reference signals for timing and synchronous tracking, so as to achieve robust performance. Such a receiving method can make use of the reference signal as much as possible to guarantee the timing and synchronous tracking performances and improve communication quality.

During operation, the sending device may reduce the transmission bandwidth due to energy saving or other reasons, and further, the sending device also reduces the overhead of the reference signal, then the sending device also needs to adjust the granularity of sending the reference signal while adjusting the sending bandwidth.

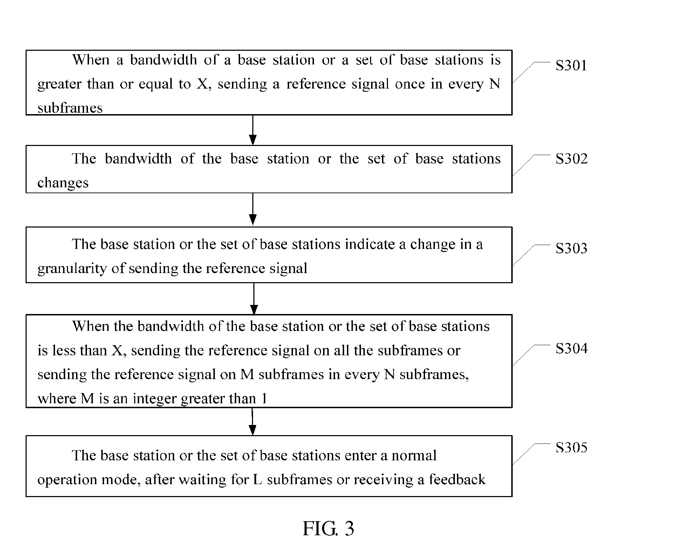

In FIG. 3, when a bandwidth of a sending device (a base station or a set of base stations) changes from being greater than or equal to X to being less than X, a granularity of sending a reference signal needs to be adjusted correspondingly, wherein sending the reference signal once in every N subframes (as shown in S301) is changed into sending the reference signal on all the subframes or sending the reference signal on M subframes in every N subframes (as shown in S304), where M is an integer greater than 1. While changing the bandwidth and changing the granularity of sending the reference signal, the sending device needs to send signaling for indicating a terminal device a change in the granularity of sending the reference signal, or indicating a terminal device a change in the system bandwidth and notifying the bandwidths before and after the change, or whether the bandwidth change exceeds a threshold corresponding to X, as shown in S303. The terminal device thus can know or infer that the granularity of sending the reference signal has changed, and thereby adjust the granularity of receiving the reference signal. The sending device needs to wait for a certain amount of time after adjusting the bandwidth and the granularity of sending the reference signal, because a certain amount of processing time is necessary for the terminal device to receive the signaling and adjust the granularity of receiving the reference signal. While waiting, the sending device can start its timer, if the timer starts from the change or sending a change instruction and ends at the L subframes, the sending device can consider that the terminal device has completed the granularity change of receiving the reference signal; or, while waiting, the sending device is waiting for feedbacks of the terminal device until all the feedbacks are received, and then the sending device starts to perform a normal operation on a new bandwidth, as shown in S305.

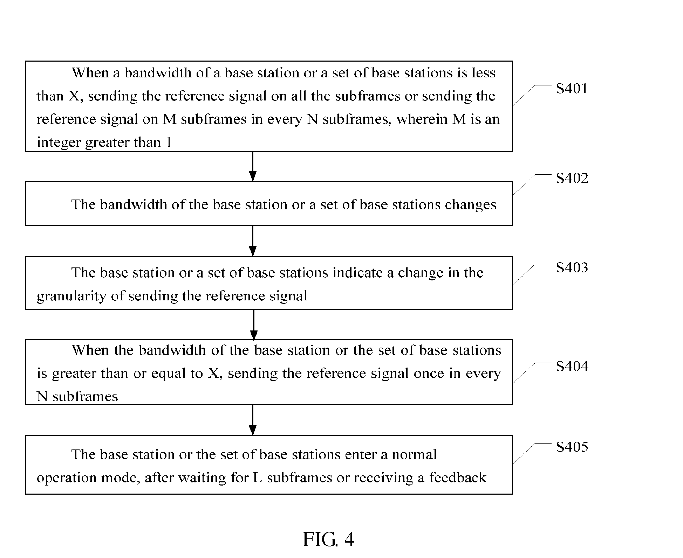

In FIG. 4, when a bandwidth of a sending device (a base station or a set of base stations) changes from being less than X to being greater than or equal to X, the granularity of sending the reference signal needs to be adjusted correspondingly, wherein sending the reference signal on all the subframes or sending the reference signal in every N subframes (as shown in S401) is changed into sending the reference signal once in every N subframes (as shown in S404), where a time length corresponding to M is less than N subframes. While changing the bandwidth and changing the granularity of sending the reference signal, the sending device needs to send signaling for indicating a terminal device a change in the granularity of sending the reference signal, or indicating a terminal device a change in the system bandwidth and notifying the bandwidths before and after the change, or whether the bandwidth change exceeds a threshold corresponding to X, as shown in S403. The terminal device thus can know or infer that the granularity of sending the reference signal has changed, and thereby adjust the granularity of receiving the reference signal. The sending device needs to wait for a certain amount of time after adjusting the bandwidth and the granularity of sending the reference signal, because a certain amount of processing time is necessary for the terminal device to receive the signaling and adjust the granularity of receiving the reference signal. While waiting, the sending device can start its timer, if the timer starts from the change or sending a change instruction and ends at the L subframes, the sending device can consider that the terminal device has completed the granularity change of receiving the reference signal; or, while waiting, the sending device is waiting for feedbacks of the terminal device until all the feedbacks are received, and then the sending device starts to perform a normal operation on a new bandwidth, as shown in S405.

Such a sending change procedure can achieve advantageous effects of the sending method shown in FIG. 1, besides, the granularity of sending the reference signal can be effectively adjusted when the sending device changes the bandwidths. Meanwhile, the signaling indication provided for the terminal device can effectively trigger the terminal device to timely adjust the granularity of receiving the reference signal, so that the sending device and the receiving device can be coordinated consistently, and communication effect can be improved.

The terminal device needs to adjust the granularity of receiving the reference signal when receiving the reference signal, and may also need to notify the sending device that the granularity of receiving the reference signal has been adjusted completely.

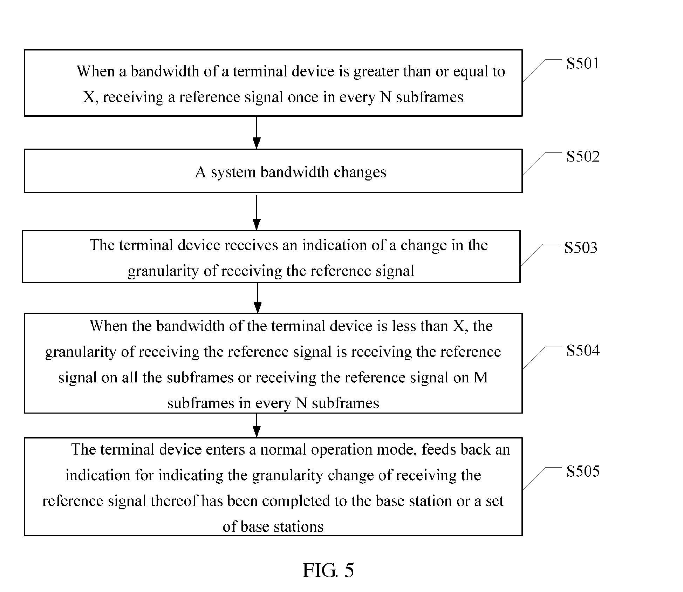

In FIG. 5, when a bandwidth of a terminal device changes from being greater than or equal to X to being less than X, a granularity of receiving a reference signal needs to be adjusted correspondingly, wherein receiving the reference signal once in every N subframes (as shown in S501) is changed into receiving the reference signal on all the subframes or receiving the reference signal on M subframes in every N subframes (as shown in S504), where a time length corresponding to M is less than N subframes. The terminal device firstly receives an signaling indication of the sending device, that is, indicating the terminal device a change in the granularity of sending the reference signal, or indicating the terminal device a change in the system bandwidth and notifying the bandwidths before and after the change, or whether the bandwidth change exceeds a threshold corresponding to X, as shown in S503. The terminal device thus can know or infer that the granularity of sending the reference signal has changed according to the signaling, and thereby adjust the granularity of receiving the reference signal. The terminal device may need to feed back to the sending device after the granularity adjustment of receiving the reference signal is completed, that is, notify the sending device that the granularity change of receiving the reference signal has been completed, as shown in S505.

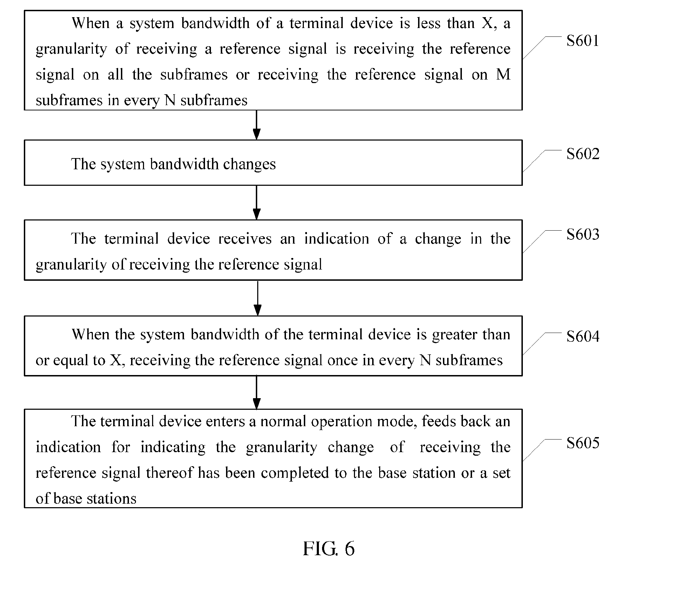

In FIG. 6, when a bandwidth of the terminal device changes from being less than X to being greater than or equal to X, a granularity of receiving a reference signal needs to be adjusted, wherein receiving the reference signal on all the subframes or receiving the reference signal on M subframes in every N subframes (as shown in S601) is changed into receiving the reference signal once in every N subframes (as shown in S604), where a time length corresponding to M is less than N subframes. The terminal device firstly receives an signaling indication of the sending device, that is, indicating the terminal device a change in the granularity of sending the reference signal, or indicating the terminal device a change in the system bandwidth and notifying the bandwidths before and after the change, or whether the bandwidth change exceeds a threshold corresponding to X, as shown in S603. The terminal device thus can know or infer that the granularity of sending the reference signal has changed according to the signaling, and thereby adjust the granularity of receiving the reference signal. The terminal device may need to feed back to the sending device after the granularity adjustment of receiving the reference signal is completed, that is, notify the sending device that the granularity change of receiving the reference signal has been completed, as shown in S605.

Such a granularity change procedure of receiving the reference signal can achieve advantageous effects of the sending method shown in FIG. 2, besides, the signaling indication provided for the terminal device can effectively trigger the terminal device to timely adjust the granularity of receiving the reference signal, so that the sending device and the receiving device can be coordinated consistently, and communication effect can be improved.

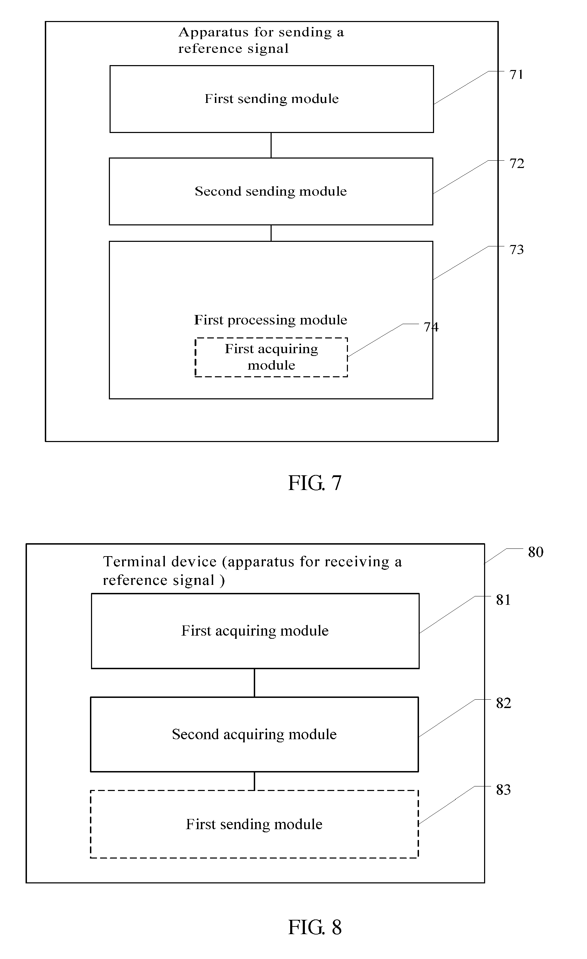

FIG. 7 shows a structural diagram of an apparatus for sending a reference signal, and the apparatus consists of a first sending module, a second sending module and a first processing module.

The first sending module, as shown by 71, is configured to send a reference signal according to the method for sending the reference signal as described above and send the reference signal and other signals within a bandwidth; and adjust a granularity of sending the reference signal according to the change method of sending the reference signal as described above, when the bandwidth changes;

The second sending module is configured to send an indication signaling for indicating a terminal device a change in the granularity of the reference signal, when the bandwidth changes and the granularity of sending the reference signal also changes;

The first processing module is configured to wait after the granularity of sending the reference signal changes, and perform subsequent processing when a certain time arrives; or
configured to perform subsequent processing after a first acquiring module receives a feedback of an apparatus for receiving the reference signal.

Such a sending device has advantageous effects that various modules support functions as described above, that is, sending the reference signal and a granularity change procedure of sending the reference signal.

FIG. 8 shows a structural diagram of a terminal device, and the device consists of a first acquiring module, a second acquiring module and a first sending module.

The first acquiring module is configured to receive a reference signal according to the method for receiving the reference signal as described above; and configured to adjust a granularity of receiving the reference signal according to the method for adjusting the granularity of receiving the reference signal as described above, when the bandwidth changes;

The second acquiring module is configured to receive a signaling for indicating a change in the granularity of the reference signal, or configured to receive a signaling for indicating a change in a bandwidth and the bandwidths before and after the change.

The first sending module is configured to feed back an indication for indicating the terminal device has completed a granularity change of receiving the reference signal.

Such a receiving device has advantageous effects that various modules support functions as described above, that is, receiving the reference signal and a granularity change procedure of receiving the reference signal.

The whole system consists of a sending device and a terminal device, when the system bandwidth changes, the sending device completes the granularity change of sending the reference signal according to the method for sending and changing the reference signal, as shown in FIGs. 1, 3 and 4, respectively, and sends a notification to the terminal device for indicating a change in the granularity of the reference signal. After receiving the notification of the granularity of sending the reference signal, the terminal device completes receiving of the reference signal and the granularity change of receiving the reference signal according to the method for receiving of the reference signal and the granularity change method of receiving the reference signal, or completes the granularity change of the reference signal and notifies to the sending device, as shown in FIGs. 2, 5 and 6, respectively.

As a whole, the method for sending the reference signal, the change procedure of sending the reference signal, the sending device, the method for receiving the reference signal, the change procedure of receiving the reference signal and the terminal device, as described above, can effectively reduce the overhead of the reference signal and meanwhile guarantee the communication quality. The overhead of the reference signal cannot be reduced without limitation, but this reduction needs to consider performances, such as the timing and synchronous tracking, radio resource management (Radio Resource Management, RRM), demodulation and channel measurement feedback, and so on, and the timing and synchronous tracking needs a certain amount of reference signals. This raises a higher requirement on a system with a smaller bandwidth, that is, when the bandwidth is small, reference signals cannot be reduced greatly. The method for sending/receiving the reference signal, and the device for sending/receiving the reference signal as described above can effectively reduce the overhead of the reference signal when the bandwidth is large, and can appropriately reduce the overhead of the reference signal when the bandwidth is small, so as to guarantee the communication quality, when the bandwidth changes, the sending end and receiving end can consistently complete granularity change of the reference signal.

It should be understood that, technical solutions of the present invention can be applicable to various communication systems, such as global system of mobile communication (Global System of Mobile communication, GSM), code division multiple access (Code Division Multiple Access, CDMA) system, wideband code division multiple access (Wideband Code Division Multiple Access, WCDMA) system, general packet radio service (General Packet Radio Service, GPRS), long term evolution (Long Term Evolution, LTE) system, LTE frequency division duplex (Frequency Division Duplex, FDD) system, LTE time division duplex (Time Division Duplex, TDD), universal mobile telecommunication system (Universal Mobile Telecommunication System, UMTS), worldwide interoperability for microwave access (Worldwide Interoperability for Microwave Access, WiMAX) communication system.

It should also be understood that, in the embodiments of the present invention, a user equipment (User Equipment, UE) also can be called a terminal (Terminal), a mobile station (Mobile Station, MS), or a mobile terminal (Mobile Terminal) and so on, and the user equipment can communicate with one or more core networks via a radio access network (Radio Access Network, RAN), for example, the user equipment can be a mobile phone (or a "cellular" phone) and a computer with a mobile terminal, and thus can be, for example, portable, pocket, hand-held, computer-included, or vehicle-mounted mobile apparatuses which communicate voice and/or data with a radio access network.

In the embodiments of the present invention, the base station can be a base station ( Base Transceiver Station, BTS) in GSM or CDMA, or a base station (NodeB, NB) in WCDMA, or an evolved Node B (Evolutional Node B, ENB or e-NodeB) in LTE, and the present invention is not limited thereto. For ease of description only, the embodiments below will be described taking an eNB and a user equipment UE as examples.

Understandably, in the embodiments described herein, the disclosed apparatus, method and system may be implemented in other modes. For example, the device embodiments above are illustrative in nature, and the units of the device are defined from the perspective of logical functions only and may be defined in a different method in practical application. For example, multiple units or modules may be combined or integrated into another system, or some features may be ignored or not executed.

It should be appreciated by persons skilled in the art that, all or a part of the steps for implementing the method of the above embodiments may be completed by relevant hardware under the instruction of a program, and the program may be stored in a computer readable storage medium, when the program is executed, the steps in the method of the above embodiments are performed; the storage medium comprises various media capable of storing program codes, such as a ROM, a RAM, a floppy disk, or an optical disk and the like.

The above descriptions are merely specific implementation methods of the present invention, but not intended to limit the protection scope of the present invention. Any modifications, variations or replacement that can be easily derived by persons skilled in the art within the technical scope disclosed by the present invention shall fall within the protection scope of the present invention. Therefore, the protection scope of the present invention is subject to the appended claims.

## Claims

1. A method for sending a reference signal, **characterized by** comprising:
when a system bandwidth is greater than or equal to X, sending (S101) the reference signal on one subframe in every N subframes, wherein N is an integer greater than 1; when the system bandwidth is less than X, sending the reference signal on M subframes in every N subframes, wherein M is an integer greater than 1; or
when a system bandwidth is greater than X, sending (S102) the reference signal on one subframe in every N subframes, wherein N is an integer greater than 1; when the system bandwidth is less than or equal to X, sending the reference signal on M subframes in every N subframes, wherein M is an integer greater than 1.

2. The method according to claim 1, wherein, when the bandwidth changes, a granularity of sending the reference signal needs to be adjusted,
when the bandwidth changes from being less than X to being greater than or equal to X, sending the reference signal on M subframes in every N subframes is changed into sending the reference signal on one subframe in every N subframes;
when the bandwidth changes from being greater than or equal to X to being less than X, sending the reference signal on one subframe in every N subframes is changed into sending the reference signal on M subframes in every N subframes.

3. The method according to claim 1, wherein, when the bandwidth changes, a granularity of sending the reference signal needs to be adjusted,
when the bandwidth changes from being less than or equal to X to being greater than X, sending the reference signal on M subframes in every N subframes is changed into sending the reference signal on one subframe in every N subframes;
when the bandwidth changes from being greater than X to being less than or equal to X, sending the reference signal on one subframe in every N subframes is changed into sending the reference signal on M subframes in every N subframes.

4. The method according to any one of claims 1 to 3, wherein a value of X is one of the following:
X is 25PRB or equal to a bandwidth of 5 MHz;
X is 15PRB or equal to a bandwidth of 3MHz;
X is 6PRB or equal to a bandwidth of 1.4MHz.

5. The method according to any one of claims 1 to 3, wherein:
N=5×k, M >1 and M≤N, wherein k is an integer.

6. The method according to any one of claims 1 to 3, wherein, when the bandwidth changes and a granularity of sending the reference signal needs to be adjusted, a signaling indication needs to be sent,
for indicating a change in a granularity of the reference signal; or
for indicating a change in a bandwidth, and the bandwidths before and after the change.

7. A method for receiving a reference signal, **characterized by** comprising:
when a bandwidth is greater than or equal to X, receiving (S201) the reference signal once in every N subframes; when the bandwidth is less than X, receiving the reference signal on all the subframes, or receiving the reference signal on M subframes in every N subframes, wherein M is an integer greater than 1;
or
when a bandwidth is greater than X, receiving (S202) the reference signal once in every N subframes; when the bandwidth is less than or equal to X, receiving the reference signal on all the subframes, or receiving the reference signal on M subframes in every N subframes, wherein M is an integer greater than 1.

8. The method according to claim 7, wherein, when the bandwidth changes, a granularity of receiving the reference signal needs to be adjusted,
when the bandwidth changes from being less than X to being greater than or equal to X, the granularity of receiving the reference signal changes from receiving the reference signal on all the subframes or receiving the reference signal on M subframes in every N subframes to receiving the reference signal once in every N subframes;
when the bandwidth changes from being greater than or equal to X to being less than X, the granularity of receiving the reference signal changes from receiving the reference signal once in every N subframes to receiving the reference signal on all the subframes or receiving the reference signal on M subframes in every N subframes.

9. The method according to claim 7, wherein, when the bandwidth changes, a granularity of receiving the reference signal needs to be adjusted,
when the bandwidth changes from being less than or equal to X to being greater than X, the granularity of receiving the reference signal changes from receiving the reference signal on all the subframes or receiving the reference signal on M subframes in every N subframes to receiving the reference signal once in every N subframes;
when the bandwidth changes from being greater than X to being less than or equal to X, the granularity of receiving the reference signal changes from receiving the reference signal once in every N subframes to receiving the reference signal on all the subframes or receiving the reference signal on M subframes in every N subframes.

10. The method according to any one of claims 7 to 9, wherein a value of X is one of the following:
X is 25PRB or equal to a bandwidth of 5 MHz;
X is 15PRB or equal to a bandwidth of 3MHz;
X is 6PRB or equal to a bandwidth of 1.4MHz.

11. The method according to any one of claims 7 to 9, wherein:
N=5×k, M >1 and M≤N, wherein k is an integer.

12. The method according to any one of claims 7 to 9, wherein, determining, by a receiving terminal, whether a granularity of receiving the reference signal needs to be adjusted according to an indication,
directly determining whether the granularity of receiving the reference signal changes according to a received signaling; or
determining whether the granularity of receiving the reference signal changes according to received bandwidths before and after a change.

13. The method according to claim 12, wherein, after the receiving terminal receives the indication and determines the granularity of receiving the reference signal needs to change, L subframes need to be waited until a granularity change of receiving the reference signal takes effect.

14. An apparatus for sending a reference signal, **characterized by** comprising:
a first sending module (71), configured to send the reference signal according to the method according to any of claims 1 to 5; and
a second sending module (72), configured to send an indication signaling for indicating a terminal device a change in the granularity of the reference signal, when the bandwidth changes and the granularity of sending the reference signal also changes.

15. A terminal device, **characterized by** comprising:
a first acquiring module (81), configured to receive the reference signal according to the method according to any of claims 7 to 11;
a second acquiring module (82), configured to receive a signaling for indicating a change in the granularity of the reference signal, or configured to receive a signaling for indicating a change in a bandwidth, and the bandwidths before and after the change; and
a first sending module (83), configured to feed back an indication for indicating the terminal device has completed a granularity change of receiving the reference signal.

## Patentansprüche

1. Verfahren zum Senden eines Referenzsignals, **dadurch gekennzeichnet, dass** es Folgendes umfasst:
wenn eine Systembandbreite größer als oder gleich X ist, Senden (S101) des Referenzsignals auf einem Unterrahmen von N Unterrahmen, wobei N eine Ganzzahl größer als 1 ist; wenn die Systembandbreite kleiner als X ist, Senden des Referenzsignals auf M Unterrahmen von N Unterrahmen, wobei M eine Ganzzahl größer als 1 ist; oder
wenn eine Systembandbreite größer als X ist, Senden (S102) des Referenzsignals auf einem Unterrahmen von N Unterrahmen, wobei N eine Ganzzahl größer als 1 ist;
wenn die Systembandbreite kleiner als oder gleich X ist, Senden des Referenzsignals auf M Unterrahmen von N Unterrahmen, wobei M eine Ganzzahl größer als 1 ist.

2. Verfahren nach Anspruch 1, wobei dann, wenn sich die Bandbreite ändert, eine Granularität zum Senden des Referenzsignals angepasst werden muss,
wenn sich die Bandbreite von kleiner als X zu größer als oder gleich X ändert, Senden des Referenzsignals auf M Unterrahmen von N Unterrahmen zu Senden des Referenzsignals auf einem Unterrahmen von N Unterrahmen geändert wird;
wenn sich die Bandbreite von größer als oder gleich X zu kleiner als X ändert, Senden des Referenzsignals auf einem Unterrahmen von N Unterrahmen zu Senden des Referenzsignals auf M Unterrahmen von N Unterrahmen geändert wird.

3. Verfahren nach Anspruch 1, wobei dann, wenn sich die Bandbreite ändert, eine Granularität zum Senden des Referenzsignals angepasst werden muss,
wenn sich die Bandbreite von kleiner als oder gleich X zu größer als X ändert, Senden des Referenzsignals auf M Unterrahmen von N Unterrahmen zu Senden des Referenzsignals auf einem Unterrahmen von N Unterrahmen geändert wird;
wenn sich die Bandbreite von größer als X zu kleiner als oder gleich X ändert, Senden des Referenzsignals auf einem Unterrahmen von N Unterrahmen zu Senden des Referenzsignals auf M Unterrahmen von N Unterrahmen geändert wird.

4. Verfahren nach einem der Ansprüche 1 bis 3, wobei ein Wert von X einer aus den Folgenden ist:
X ist 25PRB oder gleich einer Bandbreite von 5 MHz;
X ist 15PRB oder gleich einer Bandbreite von 3 MHz;
X ist 6PRB oder gleich einer Bandbreite von 1,4 MHz.

5. Verfahren nach einem der Ansprüche 1 bis 3, wobei:
N = 5 × k, M > 1 und M ≤ N ist, wobei k eine Ganzzahl ist.

6. Verfahren nach einem der Ansprüche 1 bis 3, wobei dann, wenn sich die Bandbreite ändert und eine Granularität zum Senden des Referenzsignals angepasst werden muss, eine Signalisierungsangabe gesendet werden muss
zum Angeben einer Änderung einer Granularität des Referenzsignals; oder
zum Angeben einer Änderung einer Bandbreite und der Bandbreiten vor und nach der Änderung.

7. Verfahren zum Empfangen eines Referenzsignals, **dadurch gekennzeichnet, dass** es Folgendes umfasst:
wenn eine Bandbreite größer als oder gleich X ist, Empfangen (S201) des Referenzsignals einmal in N Unterrahmen; wenn die Bandbreite kleiner als X ist, Empfangen des Referenzsignals auf allen Unterrahmen oder Empfangen des Referenzsignals auf M Unterrahmen von N Unterrahmen, wobei M eine Ganzzahl größer als 1 ist; oder
wenn eine Bandbreite größer als X ist, Empfangen (S202) des Referenzsignals einmal in N Unterrahmen; wenn die Bandbreite kleiner als oder gleich X ist, Empfangen des Referenzsignals auf allen Unterrahmen oder Empfangen des Referenzsignals auf M Unterrahmen von N Unterrahmen, wobei M eine Ganzzahl größer als 1 ist.

8. Verfahren nach Anspruch 7, wobei dann, wenn sich die Bandbreite ändert, eine Granularität zum Empfangen des Referenzsignals angepasst werden muss,
wenn sich die Bandbreite von kleiner als X zu größer als oder gleich X ändert, sich die Granularität zum Empfangen des Referenzsignals von Empfangen des Referenzsignals auf allen Unterrahmen oder Empfangen des Referenzsignals auf M Unterrahmen von N Unterrahmen zu Empfangen des Referenzsignals einmal in N Unterrahmen ändert;
wenn sich die Bandbreite von größer als oder gleich X zu kleiner als X ändert, sich die Granularität zum Empfangen des Referenzsignals von Empfangen des Referenzsignals einmal in N Unterrahmen zu Empfangen des Referenzsignals auf allen Unterrahmen oder Empfangen des Referenzsignals auf M Unterrahmen von N Unterrahmen ändert.

9. Verfahren nach Anspruch 7, wobei dann, wenn sich die Bandbreite ändert, eine Granularität zum Empfangen des Referenzsignals angepasst werden muss,
wenn sich die Bandbreite von kleiner als oder gleich X zu größer als X ändert, sich die Granularität zum Empfangen des Referenzsignals von Empfangen des Referenzsignals auf allen Unterrahmen oder Empfangen des Referenzsignals auf M Unterrahmen von N Unterrahmen zu Empfangen des Referenzsignals einmal in N Unterrahmen ändert;
wenn sich die Bandbreite von größer als X zu kleiner als oder gleich X ändert, sich die Granularität zum Empfangen des Referenzsignals von Empfangen des Referenzsignals einmal in N Unterrahmen zu Empfangen des Referenzsignals auf allen Unterrahmen oder Empfangen des Referenzsignals auf M Unterrahmen von N Unterrahmen ändert.

10. Verfahren nach einem der Ansprüche 7 bis 9, wobei ein Wert von X einer aus den Folgenden ist:
X ist 25PRB oder gleich einer Bandbreite von 5 MHz;
X ist 15PRB oder gleich einer Bandbreite von 3 MHz;
X ist 6PRB oder gleich einer Bandbreite von 1,4 MHz.

11. Verfahren nach einem der Ansprüche 7 bis 9, wobei:
N = 5 × k, M > 1 und M ≤ N ist, wobei k eine Ganzzahl ist.

12. Verfahren nach einem der Ansprüche 7 bis 9, wobei Bestimmen durch ein Empfangsendgerät, ob eine Granularität zum Empfangen des Referenzsignals gemäß einer Angabe angepasst werden muss,
direktes Bestimmen, ob sich die Granularität zum Empfangen des Referenzsignals ändert, gemäß einer empfangenen Signalisierung; oder
Bestimmen, ob sich die Granularität zum Empfangen des Referenzsignals ändert, gemäß empfangenen Bandbreiten vor und nach einer Änderung.

13. Verfahren nach Anspruch 12, wobei, nachdem das Empfangsendgerät die Angabe empfängt und bestimmt, dass sich die Granularität zum Empfangen des Referenzsignals ändern muss, L Unterrahmen warten müssen, bis eine Granularitätsänderung zum Empfangen des Referenzsignals wirksam wird.

14. Vorrichtung zum Senden eines Referenzsignals, **dadurch gekennzeichnet, dass** sie Folgendes umfasst:
ein erstes Sendemodul (71), das konfiguriert ist, das Referenzsignal gemäß dem Verfahren nach einem der Ansprüche 1 bis 5 zu senden; und
ein zweites Sendemodul (72), das konfiguriert ist, eine Angabesignalisierung zum Angeben einer Änderung der Granularität des Referenzsignals für eine Endgerätevorrichtung zu senden, wenn sich die Bandbreite ändert und sich die Granularität zum Senden des Referenzsignals ebenfalls ändert.

15. Endgerätevorrichtung, **dadurch gekennzeichnet, dass** sie Folgendes umfasst:
ein erstes Erfassungsmodul (81), das konfiguriert ist, das Referenzsignal gemäß dem Verfahren nach einem der Ansprüche 7 bis 11 zu empfangen;
ein zweites Erfassungsmodul (82), das konfiguriert ist, eine Signalisierung zum Angeben einer Änderung der Granularität des Referenzsignals zu empfangen, oder konfiguriert ist, eine Signalisierung zum Angeben einer Änderung einer Bandbreite und der Bandbreiten vor und nach der Änderung zu empfangen; und
ein erstes Sendemodul (83), das konfiguriert ist, eine Angabe zum Angeben, dass die Endgerätevorrichtung eine Granularitätsänderung zum Empfangen des Referenzsignals fertiggestellt hat, zurückzumelden.

## Revendications

1. Procédé permettant d'envoyer un signal de référence, **caractérisé en ce qu'**il comprend :
lorsqu'une bande passante système est supérieure ou égale à X, envoyer (S 101) le signal de référence sur une sous-trame toutes les N sous-trames, N étant un nombre entier supérieur à 1 ; lorsque la bande passante système est inférieure à X, envoyer le signal de référence sur M sous-trames toutes les N sous-trames, M étant un nombre entier supérieur à 1 ; ou
lorsqu'une bande passante système est supérieure à X, envoyer (S102) le signal de référence sur une sous-trame toutes les N sous-trames, N étant un nombre entier supérieur à 1 ; lorsque la bande passante système est inférieure ou égale à X, envoyer le signal de référence sur M sous-trames toutes les N sous-trames, M étant un nombre entier supérieur à 1.

2. Procédé selon la revendication 1 dans lequel, lorsque la bande passante change, une granularité consistant à envoyer le signal de référence doit être ajustée,
lorsque la bande passante change, passant de inférieure à X à supérieure ou égale à X, envoyer le signal de référence sur M sous-trames toutes les N sous-trames devient envoyer le signal de référence sur une sous-trame toutes les N sous-trames ;
lorsque la bande passante change, passant de supérieure ou égale à X à inférieure à X, envoyer le signal de référence sur une sous-trame toutes les N sous-trames devient envoyer le signal de référence sur M sous-trames toutes les N sous-trames.

3. Procédé selon la revendication 1 dans lequel, lorsque la bande passante change, une granularité consistant à envoyer le signal de référence doit être ajustée,
lorsque la bande passante change, passant de inférieure ou égale à X à supérieure à X, envoyer le signal de référence sur M sous-trames toutes les N sous-trames devient envoyer le signal de référence sur une sous-trame toutes les N sous-trames ;
lorsque la bande passante change, passant de supérieure à X à inférieure ou égale à X, envoyer le signal de référence sur une sous-trame toutes les N sous-trames devient envoyer le signal de référence sur M sous-trames toutes les N sous-trames.

4. Procédé selon l'une quelconque des revendications 1 à 3, dans lequel une valeur de X est une des valeurs suivantes :
X est 25PRB ou égal à une bande passante de 5 MHz ;
X est 15PRB ou égal à une bande passante de 3 MHz ;
X et 6PRB ou égal à une bande passante de 1,4 MHz.

5. Procédé selon l'une quelconque des revendications 1 à 3, dans lequel :
N=5xk, M>1 et M≤N, k étant un nombre entier.

6. Procédé selon l'une quelconque des revendications 1 à 3 dans lequel, lorsque la bande passante change et qu'une granularité consistant à envoyer le signal de référence doit être ajustée, une indication de signalisation doit être envoyée,
pour indiquer un changement d'une granularité du signal de référence ; ou
pour indiquer un changement d'une bande passante, et les bandes passantes avant et après le changement.

7. Procédé permettant de recevoir un signal de référence, **caractérisé en ce qu'**il comprend :
lorsqu'une bande passante est supérieure ou égale à X, recevoir (S201) le signal de référence une fois toutes les N sous-trames ; lorsque la bande passante est inférieure à X, recevoir le signal de référence sur toutes les sous-trames, ou recevoir le signal de référence sur M sous-trames toutes les N sous-trames, M étant un nombre entier supérieur à 1 ;
ou
lorsqu'une bande passante est supérieure à X, recevoir (S202) le signal de référence une fois toutes les N sous-trames ; lorsque la bande passante est inférieure ou égale à X, recevoir le signal de référence sur toutes les sous-trames, ou recevoir le signal de référence sur M sous-trames toutes les N sous-trames, M étant un nombre entier supérieur à 1.

8. Procédé selon la revendication 7 dans lequel, lorsque la bande passante change, une granularité consistant à recevoir le signal de référence doit être ajustée,
lorsque la bande passante change, passant de inférieure à X à supérieure ou égale à X, la granularité consistant à recevoir le signal de référence passe de recevoir le signal de référence sur toutes les sous-trames ou recevoir le signal de référence sur M sous-trames toutes les N sous-trames à recevoir le signal de référence une fois toutes les N sous-trames ;
lorsque la bande passante change, passant de supérieure ou égale à X à inférieure à X, la granularité consistant à recevoir le signal de référence passe de recevoir le signal de référence une fois toutes les N sous-trames à recevoir le signal de référence sur toutes les sous-trames ou recevoir le signal de référence sur M sous-trames toutes les N sous-trames.

9. Procédé selon la revendication 7 dans lequel, lorsque la bande passante change, une granularité consistant à recevoir le signal de référence doit être ajustée,
lorsque la bande passante change, passant de inférieure ou égale à X à supérieure à X, la granularité consistant à recevoir le signal de référence passe de recevoir le signal de référence sur toutes les sous-trames ou recevoir le signal de référence sur M sous-trames toutes les N sous-trames à recevoir le signal de référence une fois toutes les N sous-trames ;
lorsque la bande passante change, passant de supérieure à X à inférieure ou égale à X, la granularité consistant à recevoir le signal de référence passe de recevoir le signal de référence une fois toutes les N sous-trames à recevoir le signal de référence sur toutes les sous-trames ou recevoir le signal de référence sur M sous-trames toutes les N sous-trames.

10. Procédé selon l'une quelconque des revendications 7 à 9, dans lequel une valeur de X est une des valeurs suivantes :
X est 25PRB ou égal à une bande passante de 5 MHz ;
X est 15PRB ou égal à une bande passante de 3 MHz ;
X et 6PRB ou égal à une bande passante de 1,4 MHz.

11. Procédé selon l'une quelconque des revendications 7 à 9, dans lequel :
N=5xk, M>1 et M≤N, k étant un nombre entier.

12. Procédé selon l'une quelconque des revendications 7 à 9, dans lequel déterminer, par un terminal de réception, si une granularité consistant à recevoir le signal de référence doit être ajustée selon une indication,
déterminer directement si la granularité consistant à recevoir le signal de référence change selon une signalisation reçue ; ou
déterminer si la granularité consistant à recevoir le signal de référence change selon des bandes passantes reçues avant et après un changement.

13. Procédé selon la revendication 12 dans lequel, après que le terminal de réception a reçu l'indication et a déterminé que la granularité consistant à recevoir le signal de référence doit changer, il faut attendre L sous-trames avant qu'un changement de granularité permettant de recevoir le signal de référence ne prenne effet.

14. Appareil permettant d'envoyer un signal de référence, **caractérisé en ce qu'**il comprend :
un premier module d'envoi (71), configuré pour envoyer le signal de référence selon le procédé selon l'une quelconque des revendications 1 à 5 ; et
un deuxième module d'envoi (72), configuré pour envoyer une signalisation d'indication permettant d'indiquer à un dispositif terminal un changement de la granularité du signal de référence, lorsque la bande passante change et que la granularité consistant à envoyer le signal de référence change également.

15. Dispositif terminal, **caractérisé en ce qu'**il comprend :
un premier module d'acquisition (81), configuré pour recevoir le signal de référence selon le procédé selon l'une quelconque des revendications 7 à 11 ;
un deuxième module d'acquisition (82), configuré pour recevoir une signalisation permettant d'indiquer un changement de la granularité du signal de référence, ou configuré pour recevoir une signalisation permettant d'indiquer un changement d'une bande passante, et les bandes passantes avant et après le changement ; et
un premier module d'envoi (83), configuré pour retourner une indication permettant de signaler que le dispositif terminal a effectué un changement de granularité permettant de recevoir le signal de référence.
